Europäisches Patentamt

European Patent Office

Office européen des brevets

(19)

(11) Veröffentlichungsnummer: **0 230 513**
**A2**

(12) **EUROPÄISCHE PATENTANMELDUNG**

(21) Anmeldenummer: **86113102.7**

(22) Anmeldetag: **15.07.83**

(51) Int. Cl.⁴: **A23F 5/36** , A23L 2/38 , A23F 3/34

(30) Priorität: **17.07.82 DE 3226765**
**07.10.82 DE 3237077**
**04.02.83 DE 3303709**

(43) Veröffentlichungstag der Anmeldung:
**05.08.87 Patentblatt 87/32**

(60) Veröffentlichungsnummer der früheren
Anmeldung nach Art. 76 EPÜ: **0 099 557**

(84) Benannte Vertragsstaaten:
**AT BE CH DE FR GB IT LI LU NL SE**

(71) Anmelder: **Krüger GmbH & Co. KG**
**Meisenweg 2 Postfach 20 05 29**
**D-5060 Bergisch Gladbach 2(DE)**

(72) Erfinder: **Schott, Gerhard**
**Am Werfel 14**
**D-4020 Mettmann(DE)**

(74) Vertreter: **Werner, Hans-Karsten, Dr. et al**
**Deichmannhaus am Hauptbahnhof**
**D-5000 Köln 1(DE)**

(54) **Instant-Getränke und Instant-Tees sowie Verfahren zu ihrer Herstellung.**

(57) Instant-Getränke, Instant-Tees und Instant-Tee-Getränke sowie Instant-Frucht-Tees und Instant-Frucht-Tee-Getränke in Pulver-, Granulat-oder Pastenform, welche Kakaopulver oder pulverförmige Genußsäuren und/oder Vitamine, Pflanzenextrakte und/oder Pflanzenpulver und/oder Fruchtextrakte und/oder Fruchtpulver enthalten, sowie ggf. Geschmacks-und/oder Aromastoffe und einen Träger, werden hergestellt, indem sie keinen Zusatz von kariogenen Kohlenhydraten enthalten, der Träger ein in Wasser lösliches Protein aus Weizen, Mais oder Soja ist und in einer Menge von 50 bis 90 Gew.-% vorliegt.

EP 0 230 513 A2

## Instant-Getränke und Instant-Tees sowie Verfahren zu ihrer Herstellung

Instant-Tees wurden bisher in erheblichem Umfang aus getrockneten Pflanzenextrakten, gegebenenfalls Geschmacks-und/oder Aromastoffen und einem rasch wasserlöslichen Träger hergestellt. Als Träger wurden vorwiegend Saccharose und Dextrose eingesetzt. Die Instant-Tees wurden hergestellt, indem man die Komponenten mit Ausnahme des Trägers entweder einzeln oder gemeinsam sprühgetrocknet mit dem Träger vermischt hat und gewünschtenfalls anschließend granuliert hat. Besonders empfindliche Pflanzenextrakte sind zum Teil auch durch Gefriertrocknung gewonnen worden. Wegen der relativ hohen Kosten einer Gefriertrocknung wurde statt dessen auch gelegentlich ein sprühgetrocknetes Präparat eingesetzt, dem anschließend wieder ein Geschmacks-oder Aromastoff zugesetzt werden konnte. Instant-Tees auf Basis von Saccharose und/oder Dextrose enthielten im allgemeinen 1 bis 6, vorzugsweise 2% Pflanzenextrakt. Die überwiegende Menge des Instant-Tees bestand aus dem Träger, der dementsprechend 94 bis 99 Gew.-% ausmachte.

Instant-Tees auf Basis von Saccharose und/oder Dextrose weisen den Nachteil auf, daß bei übersteigerter Verwendung insbesondere bei Säuglingen und Kleinkindern, durch den eingesetzten Zucker gehäuft Karies beobachtet wird. In einigen Produkten ist man daher dazu übergegangen, als Trägerstoff Maltodextrin einzusetzen. Untersuchungen haben jedoch ergeben, daß auch Maltodextrin ähnliche kariogene Eigenschaften wie Saccharose und Dextrose hat.

Die Erfindung hat sich zunächst die Aufgabe gestellt, Instant-Tees zu entwickeln, welche nicht den Nachteil der Kariogenität aufweisen und daher unbedenklich auch bei Säuglingen und Kleinkindern eingesetzt werden können. Dabei sollen jedoch die Haltbarkeit, Dosierbarkeit und Handhabbarkeit herkömmlicher Instant-Tees erhalten bleiben.

Lebensmittelrechtlich unterscheidet man Tee, Tee-Getränke, Frucht-Tee und Frucht-Tee-Getränke. In allen Fällen ist ein wesentlicher Bestandteil ein Extrakt oder Pulver pflanzlicher Herkunft, wobei Blätter, Wurzeln, Rinden, Blüten aber auch Früchte verwendet werden. Der Begriff Tee umfaßt somit sprachlich eine Reihe von pflanzlichen Extrakten und Pulvern, die lebensmittelrechtlich je nach ihrer Herkunft und sonstigen Zutaten in die vier Gruppen: Tee, Tee-Getränke, Frucht-Tee und Frucht-Tee-Getränke unterteilt werden. Die vorliegende Erfindung betrifft alle vier lebensmittelrechtlich unterschiedenen Gruppen von Tees.

Instant-Tees umfassen somit im weitesten Sinne lebensmittelrechtlich gesehen Instant-Tees, Instant-Tee-Getränke sowie Instant-Frucht-Tees und Instant-Frucht-Tee-Getränke. Der Zusatz "Instant" besagt jeweils, daß die Tees in Pulver-, Granulat-oder Pastenform vorliegen und beim Zusammenbringen mit einer Flüssigkeit rasch dispergiert und/oder gelöst werden, so daß man rasch und einfach die trinkfertige Zubereitung erhält. Instant-Tees umfassen somit nicht die trinkfertigen Zubereitungen mit einer Flüssigkeit, sondern nur die pulver,-granulat-oder pastenförmige Vorstufe. Die erfindungsgemäßen Instant-Tees, Instant-Tee-Getränke sowie Instant-Frucht-Tees und Instant-Frucht-Tee-Getränke umfassen weiterhin nicht die reinen Pflanzen extrakte, Pflanzenpulver, Fruchtextrakte oder Fruchtpulver ohne einen Träger, da diese im allgemeinen nicht oder nur vorübergehend instantisiert werden können, meist sehr hygroskopisch sind und wegen ihrer hohen Konzentration und häufig hohen Schüttdichte sehr schwer dosierbar und handhabbar sind. Pflanzenextrakte, die ohne Träger instantisiert worden sind, sind so hygroskopisch, daß sie bereits nach kurzer Zeit unter Zutritt von Luftfeuchtigkeit zu harten Produkten verklumpen, die nicht mehr gut dosierbar sind, höhere Schüttdichte aufweisen und nur noch langsam in Wasser löslich sind. Ein weiterer Nachteil von instantisierten Pflanzenextrakten ohne Träger besteht darin, daß sie durch das Instantisieren in erheblichem Maße Aromastoffe und vielfach auch Anteile ihrer Wirkstoffe verlieren. Ein nachträglicher Zusatz von flüssigen Geschmacks-und/ oder Aromastoffen ist beim Instantisieren ohne Träger ebenfalls praktisch nicht möglich.

Es wurde jetzt gefunden, daß man Instant-Tees, Instant-Tee-Getränke sowie Instant-Frucht-Tees und Instant-Frucht-Tee-Getränke in Pulver-, Granulat-oder auch Pastenform, enthaltend Pflanzenextrakt und/oder Pflanzenpulver und/oder Fruchtextrakte und/oder Fruchtpulver sowie ggf. Geschmacks-und/oder Aromastoffe erhält, wenn man ein in Wasser lösliches Protein aus Weizen, Mais oder Soja als Träger verwendet. Die erfindungsgemäßen Instant-Tees und Instant-Tee-Getränke sowie Instant-Frucht-Tees und Instant-Frucht-Tee-Getränke sind somit dadurch gekennzeichnet, daß sie keinen Zusatz von kariogenen Kohlenhydraten enthalten, der Träger ein in Wasser lösliches Protein aus Weizen, Mais oder Soja ist und in einer Menge von 50 bis 90 Gew.-% vorliegt.

Weiterhin wurde gefunden, daß nach diesem Prinzip auch Instant-Getränke in Pulver-, Granulat-und Pastenform herstellbar sind, welche Kakaopulver, oder pulverförmige Genußsäuren und/oder Vitamine enthalten. Gegenstand der vorliegenden Anmeldung sind somit weiterhin Instant-Getränke und Verfahren zu ihrer Herstellung.

Aus der DE-A-28 07 208 (I) sind warmwasserlösliche Getränkepulvermischungen zur Herstellung von gelatinehaltigen Getränken bekannt. Dabei wird feinstgemahlenes Gelatinepulver mit einer Körnung entsprechend etwa 60 mesh mit etwa gleich großen Geschmacksträgern wie Kaffeepulver, Fruchtsaftpulver, Instantkakaopulver, Suppenpulver oder Teepulver vermischt und vorzugsweise portionsweise vakuumverpackt. Durch die spezielle Vermahlung und Vermischung mit den Geschmacksträgern soll es möglich sein, die Getränkepulvermischungen unmittelbar in heißem Wasser zu lösen, ohne daß es zu Verklumpungen führt. Sowohl bei einer gröberen als auch bei einer feineren Körnung soll die Lösungsgeschwindigkeit abnehmen und die Neigung zur Klumpenbildung steigen. Die dort beschriebenen Pulvermischungen sind keinesfalls in kaltem Wasser löslich und können daher auch nicht als Instantgetränke im Sinne der vorliegenden Erfindung angesehen werden. Die in warmem Wasser lösliche feinstgemahlene Gelatine ist somit auch nicht als Träger für die Instantgetränke anzusehen. Gelatinehaltige Speisen und Getränke sind darüber hinaus für die Säuglingsernährung lebensmittelrechtlich nicht zugelassen. Die warmlösliche, feinstgemahlene Gelatine ist auch technologisch nicht geeignet, als Träger für Instantgetränke zu dienen.

Aus der GB-A-1 464 571 (II) sind künstlich gesüßte, trockene Getränkepulvermischungen bekannt, die aus APM (L-aspartyl-L-phenyl-alanine) und einem in kaltem Wasser löslichen Molkeprotein bestehen. Molkeprotein enthält stets erhebliche Mengen Lactose, die sowohl kariogen ist als auch von Kindern - schlecht vertragen wird. Die Gemische aus APM und Molkeprotein sollen einen besseren Geschmack aufweisen als reines APM, insbesondere soll der unerwünschte Nachgeschmack unterdrückt werden. Versuche mit Gelatine haben nicht den gleichen Effekt gezeigt. Die dort beschriebenen Gemische können im Gemisch mit kariogenen Süßungsmitteln wie Saccharose, Glucose etc. verwendet werden. Die Pulver waren offensichtlich nicht instantisiert und wurden durch Verrühren mit Wasser zu Getränken verarbeitet. Das Molkeprotein ist somit nicht als Träger eines Instantgetränkes verwendet worden.

Die US-A-3,970,520 (III) beschreibt die Herstellung von geschmacklich akzeptablen wasserlöslichen Proteinen durch enzymatische Teilhydrolyse. Diese Proteine wurden zur Verbesserung des Nährwertes Lebensmitteln zugesetzt und erhöhten beispielsweise das Schäumen von Bier oder den Nährwert von karbonisierten Getränken. Die fertigen Gemische enthielten stets größere Mengen kariogener Kohlenhydrate. Die dort beschriebenen Gemische waren nicht instantisiert und die dort beschriebenen Proteine wirkten nicht als Träger von Instantgetränken.

Erfindungsgemäß werden als Träger wasserlösliche Proteine aus Weizen, Mais oder Soja eingesetzt.

Im Gegensatz zu Instant-Tees auf Basis von Saccharose und/ oder Dextrose, die im allgemeinen 1-6%, vorzugsweise 2% Pflanzenextrakt enthalten, enthalten die erfindungsgemäßen Instant-Tees, Instant-Tee-Getränke sowie Instant-Frucht-Tees und Instant-Frucht-Tee-Getränke 10 -50 Gew.-% Pflanzenextrakt und/oder Pflanzenpulver und/oder Fruchtextrakte und/oder Fruchtpulver und dementsprechend nur 50 -90 Gew.-% Protein als Träger.

Überraschenderweise ist es möglich, bei der erfindungsgemäßen Verwendung von Protein als Träger eine größere Menge Kakaopulver, Pflanzenextrakt und/oder Pflanzenpulver und/ oder Fruchtextrakt und/oder Fruchtpulver zu instantisieren und dabei trotzdem noch Produkte zu erhalten, die bezüglich Haltbarkeit, Dosierbarkeit und Handhabbarkeit mit herkömmlichen Instant-Getränken und Instant-Tees auf Basis von Saccharose und/oder Dextrose vergleichbar oder sogar besser sind. Dieser Effekt beruht zum Teil darauf, daß die Schüttgewichte der erfindungsgemäßen Produkte wesentlich niedriger liegen als bei Verwendung von Saccharose und/oder Dextrose als Träger. Herkömmliche Instant-Tees weisen im allgemeinen ein Schüttgewicht von 0,4 bis 0,8 g pro ml auf und die erfindungsgemäßen Produkte weisen Schüttgewichte von 0,1 -0,5, vorzugsweise etwa 0,2 g/ml auf. Die erfindungsgemäßen Produkte sind weiterhin wesentlich weniger hygroskopisch als instantisierte Pflanzenextrakte ohne Träger. Sie behalten daher ihr niedriges Schüttgewicht auch längere Zeit nach dem Zutritt von Luftfeuchtigkeit. Sie bleiben daher auch bei längerer Lagerung leicht dosierbar, leicht handhabbar und leicht löslich.

Die erfindungsgemäßen Instant-Getränke, Instant-Tees, Instant-Tee-Getränke, Instant-Frucht-Tees und Instant-Frucht-Tee-Getränke können ggf. Geschmacks-und/oder Aromastoffe enthalten. Zu den Geschmacksstoffen zählen unter anderem auch die kohlenhydratfreien Süßstoffe wie Saccharin, Cyclamat, Aspartam sowie die Zuckeraustauschstoffe wie Xylit, Sorbit und Mannit.

Als Aromastoffe kommen prinzipiell alle natürlichen und künstlichen Aromastoffe in Frage, die auch den instantisierten Getränken, Tees, Tee-Getränken, Frucht-Tees und Frucht-Tee-Getränken zugesetzt werden können. Da die Aromastoffe wegen ihrer Flüchtigkeit während des Instantisierens dazu neigen, ganz oder teilweise verlorenzugehen, werden sie oftmals erst danach wieder zugegeben.

Das erfindungsgemäße Verfahren zur Herstellung von Instant-Getränken, Instant-Tees, Instant-Tee-Getränken sowie Instant-Frucht-Tees und Instant-Frucht-Tee-Getränken in Pulver-oder Granulatform auf einem Träger ist somit ein Verfahren zur Herstellung von Instant-Getränken, Instant-Tees, Instant-Tee-Getränken sowie Instant-Frucht-Tees und Instant-Frucht-Tee-Getränken in Pulver-oder Granulatform, enthaltend Kakaopulver oder pulverförmige Genußsäuren und/ oder Vitamine, Pflanzenextrakte und/oder Pflanzenpulver und/oder Fruchtextrakte und/oder Fruchtpulver sowie ggf. Geschmacks-und/oder Aromastoffe auf einem Träger, dadurch gekennzeichnet, daß man entweder

a) Kakaopulver oder pulverförmige Genußsäuren und/oder Vitamine, den Pflanzenextrakt und/oder das Pflanzenpulver und/oder den Fruchtextrakt und/oder das Fruchtpulver sowie ggf. die Geschmacks-und/oder Aromastoffe und 50 bis 90 Gew.-% eines in Wasser löslichen Proteins aus Weizen, Mais oder Soja, jedoch ohne Zusatz eines kariogenen Kohlenhydrats, trocken vermischt oder

b) Kakaopulver oder pulverförmige Genußsäuren und/oder Vitamine, den Pflanzenextrakt und/oder das Pflanzenpulver und/oder den Fruchtextrakt und/oder das Fruchtpulver zusammen mit dem obigen Protein löst, vermischt und zusammen trocknet, und die so erhaltenen Produkte ggf. granuliert, preßt und/oder agglomeriert sowie ggf. mit Geschmacks-und/oder Aromastoffen versetzt.

Prinzipiell ist es in einigen Fällen möglich, auf die vollständige Trocknung zu verzichten und so rasch dispergierbare und/oder lösliche Pasten zu erhalten. Derartige Pasten lassen sich vorzugsweise in Tuben abfüllen. Derartige Pasten sind ebenfalls gut haltbar, leicht dosierbar und leicht handhabbar und können somit als Instant-Getränke, Instant-Tees, Instant-Tee-Getränke, Instant-Frucht-Tees und Instant-Frucht-Tee-Getränke angesprochen werden.

Allen erfindungsgemäßen Produkten ist gemeinsam, daß sie praktisch ohne Zusatz von kariogenen Kohlenhydraten herstellbar sind und im Vergleich zu herkömmlichen Instant-Getränken und Instant-Tees sehr geringen Nährwert enthalten. Im Gegensatz zu instantisierten Nährmitteln, die ein möglichst ausgewogenes Verhältnis zwischen Kohlenhydraten, Fett, Eiweiß und Mineralstoffen enthalten sollen, weisen die erfindungsgemäßen Produkte nur einen sehr geringen Nährwert auf. Es kann somit mit ihrer Hilfe vermieden werden, dem Körper unbeabsichtigt und unkontrolliert zusätzliche Nahrungsmittel zuzuführen. Insbesondere kann beim Einsatz der Säuglings-und Kinderernährung vermieden werden, daß der Ausbildung von Karies Vorschub geleistet wird. Ein bevorzugtes Einsatzgebiet der erfindungsgemäßen Produkte ist somit auch die Säuglings-und Kinderernährung. Prinzipiell können aber die erfindungsgemäßen Instant-Getränke, Instant-Tees, Instant-Tee-Getränke, Instant-FruchtTees und Instant-Frucht-Tee-Getränke zur Herstellung von trinkbaren Zubereitungen aller Art verwendet werden.

Als Kakaopulver kommen erfindungsgemäß alle handelsüblichen Kakaopulver in Frage, denen gewünschtenfalls nachträglich Kakaoaroma zugesetzt wird. Als pulverförmige Genußsäuren kommen insbesondere Zitronensäure, Weinsäure und Apfelsäure in Frage. Als Vitamine können Ascorbinsäure, einige oder alle Vitamine des Vitamin B-Komplexes sowie die üblichen Gemische verschiedenster Vitamine verwendet werden.

Insbesondere wenn die Vitamine mit einer wäßrigen Lösung des Proteins zusammen sprühgetrocknet werden erhöht sich die Stabilität. Ähnliche Beobachtungen werden bei Geschmacks-und Aromastoffen gemacht, die erfindungsgemäß nach der Trocknung des Proteins vor unerwünschtem Abbau und Verderb besonders geschützt sind.

Als lösliche Pflanzenextrakte und Fruchtextrakte kommen prinzipiell alle Extrakte in Frage, die bereits nach dem Stand der Technik zu Instant-Tees verarbeitet wurden. Diese Extrakte sind meist sprühgetrocknete, wässrige Extrakte. Sofern eine ausreichende Löslichkeit gewährleistet ist, können auch getrocknete alkoholische Extrakte eingesetzt oder zugemischt werden. Diese Extrakte können zusammen mit dem Protein gelöst getrocknet werden. Vorzugsweise werden sie jedoch im trockenen Zustand mit dem Träger vermischt. Für den Verbraucher besonders gut handhabbare Produkte entstehen dann, wenn diese Gemische anschließend granuliert oder gepreßt oder agglomeriert werden, wobei man ggf. in dieser Verfahrensstufe noch Geschmacks-und/oder Aromastoffe zusetzen kann. Besonders aromastabile Produkte erhält man dann, wenn die Aromastoffe in mikroverkapselter Form in das Endprodukt eingebracht werden. Neben den üblichen Granulier-, Preß-und Agglomerierverfahren kann das Endprodukt auch nach dem sogenannten Pillsbury-Verfahren zu einem flockigen Präparat verarbeitet werden.

In allen Fällen erhält man stabile, gut handhabbare und gut dosierbare Produkte mit niedriger Schüttdichte, die allen Anforderungen der Praxis gerecht werden.

In den nachfolgenden Beispielen sind typische Produkte und das Verfahren zu ihrer Herstellung näher erläutert.

B e i s p i e l   1

Husten- und Brust-Tee

| | | |
|---|---|---|
| Drogenextrakt Z 149 (Husten- und Brust-Tee) | 33,50 | kg |
| Soja-Isolat S 90 | 65,23 | kg |
| ether. Ölgemisch | 0,87 | kg |
| Süßstoff | 0,40 | kg |
| | 100,00 | kg |

B e i s p i e l   2

Magentee

| | | |
|---|---|---|
| Weizen-Protein (Dormagluten) | 78,48 | kg |
| Drogenextrakt Z 1501 (Magentee) | 20,34 | kg |
| Süßstoff | 0,80 | kg |
| ether. Ölgemisch | 0,38 | kg |
| | 100,00 | kg |

Das Produkt Dormagluten ist erhältlich von der Firma Pfeifer & Langen, Dormagen. Es handelt sich um ein wasserlösliches Polypeptid, das durch mechanische Abtrennung bei der Verarbeitung von Weizenmehl anfällt.

Es ist ein hellgelbes, geruch-und geschmackloses Pulver mit einem Trockenstoffgehalt von 91,5 bis 93,5%. Der Proteingehalt beträgt 76 bis 80%, berechnet aus Stickstoff mal 5,7.

Das Soja-Eiweißisolat S 90 ist erhältlich von der Firma Condimenta Dr. E. Rendlen GmbH, Stuttgart. Es ist ein cremefarbenes, weitgehend geschmackfreies, mehlförmiges Produkt, das instantisiert ist und durch leichte Benetzbarkeit und niedere Viskosität für Instantgetränke besonders gut geeignet ist. Es hat einen Proteingehalt (Trockenmasse) von 91,5%.

**Ansprüche**

1. Instant-Getränke, Instant-Tees und Instant-Tee-Getränke sowie Instant-Frucht-Tees, Instant-Frucht-Tee-Getränke in Pulver-, Granulat-oder Pastenform, enthaltend Kakaopulver, oder pulverförmige Genußsäuren und/oder Vitamine, Pflanzenextrakte und/oder Pflanzenpulver und/oder Fruchtextrakte und/oder Fruchtpulver, sowie ggf. Geschmacks-und/oder Aromastoffe und einen Träger, dadurch gekennzeichnet, daß sie keinen Zusatz von kariogenen Kohlenhydraten enthalten, der Träger ein in Wasser lösliches Protein aus Weizen, Mais oder Soja ist und in einer Menge von 50 bis 90 Gew.-% vorliegt.

2. Verfahren zur Herstellung von Instant-Getränken, Instant-Tees, Instant-Tee-Getränken sowie Instant-Frucht-Tees und Instant-Frucht-Tee-Getränken in Pulver-oder Granulatform, enthaltend Kakaopulver oder pulverförmige Genußsäuren und/ oder Vitamine, Pflanzenextrakte und/oder Pflanzenpulver und/oder Fruchtextrakte und/oder Fruchtpulver sowie ggf. Geschmacks-und/oder Aromastoffe auf einem Träger, dadurch gekennzeichnet, daß man entweder

a) Kakaopulver oder pulverförmige Genußsäuren und/oder Vitamine, den Pflanzenextrakt und/oder das Pflanzenpulver und/ oder den Fruchtextrakt und/oder das Fruchtpulver sowie ggf. die Geschmacks- und/oder Aromastoffe und 50 bis 90 Gew.-% eines in Wasser löslichen Proteins aus Weizen, Mais oder Soja, jedoch ohne Zusatz eines kariogenen Kohlenhydrats, trocken vermischt, oder

b) Kakaopulver oder pulverförmige Genußsäuren und/oder Vitamine, den Pflanzenextrakt und/oder das Pflanzenpulver und/ oder den Fruchtextrakt und/oder das Fruchtpulver zusammen mit dem obigen Protein löst, vermischt und zusammen trocknet, und die so erhaltenen Produkte ggf. granuliert, preßt, und/oder agglomeriert sowie ggf. mit Geschmacks-und/oder Aromastoffen versetzt.

3. Verwendung von in Wasser löslichem Protein aus Weizen, Mais oder Soja zur Herstellung von Instant-Getränken, Instant-Tees, Instant-Tee-Getränken, Instant-Frucht-Tees und Instant-Frucht-Tee-Getränken.